# EUROPÄISCHE PATENTSCHRIFT

(11) **EP 1 412 669 B1**
(45) Veröffentlichungstag und Bekanntmachung des Hinweises auf die Patenterteilung: **05.04.2006**
(21) Anmeldenummer: 02787928.7
(22) Anmeldetag: 10.12.2002
(51) Int. Cl.: F16L 37/252, B05B 7/24

(54) **FARBSPRITZPISTOLE**
PAINT SPRAY GUN
PISTOLET PULVERISATEUR DE PEINTURE

(30) Priorität: 13.02.2002 DE 10205831
(43) Veröffentlichungstag der Anmeldung: 28.04.2004
(73) Patentinhaber: Sata Farbspritztechnik GmbH & Co. KG, 70806 Kornwestheim (DE)
(72) Erfinder: SCHMON, Ewald, 72661 Grafenberg (DE); DETTLAFF, Peter, 71686 Remseck (DE)
(74) Vertreter: Schwarz, Thomas
(86) Internationale Anmeldenummer: PCT/EP2002/013966
(87) Internationale Veröffentlichungsnummer: WO 2003/069208

(56) Entgegenhaltungen:
- DE-C- 460 381
- DE-U- 8 902 223
- FR-A- 1 410 519
- US-A- 3 645 562

## Beschreibung

Die Erfindung betrifft eine Farbspritzpistole nach dem Oberbegriff des Anspruchs 1, die Verwendung, eines Anschlußteils für die Materialzuführung an einer Farbspritzpistole nach dem Oberbegriff des Anspruchs 11 die Verwendung eines Farbbehälters nach dem Oberbegriff des Anspruchs 17.

Bei den bekannten Farbspritzpistolen erfolgt die Verbindung zwischen dem Pistolenkörper und einem Farbbehälter oder einer anderen Materialzuführungseinrichtung, wie z.B. einem Schlauch oder einer Rohrzuführung, vielfach über ein Befestigungsgewinde mit mehreren Gewindegängen. Zu diesem Zweck weist der Pistolenkörper z.B. eine mit Innengewinde versehene Anschlußbohrung auf, in die ein mit Außengewinde versehenes Anschlußteil des Farbbehälters oder der Schlauch- bzw. Rohrzuführung eingeschraubt wird. Bei einem derartigen Anschluß sind jedoch zum Herstellen einer dichten Verbindung bzw. zum Lösen der Verbindung mehrere Umdrehungen erforderlich, was eine nicht unerhebliche Zeit erfordert.

Es sind auch bereits Farbspritzpistolen bekannt, bei denen die Verbindung zwischen dem Pistolenkörper und einem Farbbehälter über eine sogenannte Schraubkeilverbindung erfolgt. Eine derartige Verbindung ist in der DE 89 02 233 U1 offenbart. Dort sind an einem Verbindungsstutzen des becherförmigen Farbbehälters zwei gegenüberliegende Schraubkeile angeordnet, die von zwei einander gegenüberliegenden L-förmigen Vorsprüngen an der Oberseite des Pistolenkörpers übergriffen werden. Bei einer derartigen Schraubkeilverbindung kann der auf den Pistolenkörper aufgesetzte Farbbehälter durch eine 90°-Drehung an dem Pistolenkörper fixiert bzw. wieder gelöst werden. Durch die vorgesehene Drehung um 90° muß allerdings der Steigungswinkel der zur Anlage an den Vorsprüngen gelangenden Keilflächen der beiden Schraubkeile entsprechend hoch gewählt werden, wobei dann keine Selbsthemmung gewährleistet ist und die Gefahr eines Selbstlösens der Verbindung besteht. Außerdem ist die Fertigung der zwei gegenüberliegenden L-förmigen Vorsprünge am Pistolenkörper und der beiden zugehörigen Schraubkeile relativ aufwendig und daher mit entsprechend hohen Kosten verbunden.

Die DE 460 381 C betrifft eine Rohrverbindung, bei der das Spitzende eines ersten Rohrs in das Muffenende eines zweiten Rohrs eingeschraubt wird. Hierzu ist das kegelförmige Spitzende mit einem quadratischen Flachgewindegang versehen, der beim Einsetzen des Spitzendes in ein entsprechendes Muttergewinde an der Innenseite des ebenfalls kegelförmigen Muffenendes eingreift.

Gegenstand der US 3 645 562 ist eine Kupplung zur Verbindung zweier Rohrenden, die zwei identisch ausgeführte Kupplungsteile enthält. Die beiden Kupplungsteile enthalten jeweils zwei gegenüberliegende obere Verriegelungsansätze und zwei darunter angeordnete untere Verriegelungsansätze, die gegenüber den oberen Ansätzen versetzt und durch zwei gegenüberliegende Aussparungen voneinander getrennt sind. An der Unterseite der oberen Verriegelungsansätze sind entgegengesetzt schräge Keilflächen vorgesehen, während an der Unterseite der unteren Verrieglungsansätze nur in einer Richtung schräg verlaufende Klemmflächen vorgesehen sind.

Aufgabe der Erfindung ist es, eine kostengünstig herstellbare und einfach zu handhabende Anschlußmöglichkeit für die Materialzuführung an einer Farbspritzpistole zu schaffen.

Diese Aufgabe wird durch eine Farbspritzpistole mit den Merkmalen des Anspruchs 1, durch die Verwendung eines Anschlußteils mit den Merkmalen des Anspruchs 11 und durch die Verwendung eines Farbbehälters mit den Merkmalen des Anspruchs 17 gelöst. Zweckmäßige Ausgestaltungen und vorteilhafte Weiterbildungen der Erfindung sind in den Unteransprüchen angegeben.

Im Vergleich zu den herkömmlichen Anschlußmöglichkeiten wird durch das erfindungsgemäße Konzept auf besonders einfache und kostengünstige Weise eine schnelle und bedienerfreundliche Montage und Demontage einer Materialzuführungseinrichtung, wie z.B. eines Farbbechers, einer Rohrzuführung, oder eines Schlauches, ermöglicht. Es sind keine aufwendigen Verbindungs- und Dichtungselemente erforderlich.

Das zum Eingriff mit einem korrespondierenden Gegenelement am Pistolenkörper vorgesehene Schraubkeilelement verläuft über mehr als die Hälfte des Umfangs des Anschlußteils, wobei zwischen dem Anfang und Ende des umlaufenden Schraubkeilelements eine Aussparung besteht. In diese Aussparung kann ein einseitiger Ansatz oberhalb einer Aufnahmebohrung des Pistolenkörpers eingreifen, wenn das Anschlußteil mit einem unteren Führungsbereich in die Aufnahmebohrung eingesetzt wird. An dem einseitigen Ansatz ist das Gegenelement zum Eingriff des Schraubkeilelements angeordnet. Das Schraubkeilelement und das Gegenelement sind derart aufeinander abgestimmt, daß sich durch Drehung des in die Aufnahmebohrung eingesetzten Anschlußteils das Schraubkeilelement innerhalb des Gegenelements verklemmt, so daß das Anschlußteil in dem Pistolenkörper gehalten wird. Da sich das Schraubkeilelement über mehr als die Hälfte des Umfangs erstreckt, kann der Steigungwinkel der Klemmflächen verringert werden, wodurch eine Selbsthemmung gewährleistet werden kann.

In einer zweckmäßigen Ausführung ist das Schraubkeilelement als ein vom Anschlußteil vorstehendes Keilprofil und das dazu korrespondierende Gegenelement in Form einer an der Innenseite des Ansatzes angeordneten Keilnut ausgeführt. In entsprechender Weise kann jedoch die Keilnut auch am Anschlußteil und das vorstehende Keilprofil am Ansatz ausgebildet sein.

In einer weiteren vorteilhaften Ausführung ist an dem Anschlußteil eine Dichtfläche vorgesehen, die bei der Befestigung des Abschlußteils am Pistolenkörper zur abdichtenden Anlage an einer entsprechenden Anlagefläche im Inneren der Aufnahmebohrung gelangt.

In einer weiteren zweckmäßigen Ausführung ist an einem unteren Einsatzstück des Verbindungsteils ein zusätzliches Befestigungsgewinde vorgesehen. Dieses Befestigungsgewinde ist zum Eingriff mit einem Innengewinde bestimmt, das bei den bekannten Farbspritzpistolen zur Befestigung des Farbbehälters vorgesehen ist. Dadurch kann das Anschlußteil auch für herkömmliche Farbspritzpistolen verwendet werden, die ein konventionelles Innengewinde in der Aufnahmebohrung aufweisen.

Das Anschlußteil kann z.B. als Adapter zur Verbindung mit einem konventionellen Farbbehälter oder einer anderen Materialzuführungseinrichtung ausgeführt sein. Das Anschlußteil kann aber auch ein fest mit dem Farbbehälter oder dgl. verbundenes Teil oder einstückig mit dem Farbbehälter ausgebildet sein.

Weitere Besonderheiten und Vorzüge der Erfindung ergeben sich aus der folgenden Beschreibung eines bevorzugten Ausführungsbeispiels anhand der Zeichnung. Es zeigt:
- **Figur 1**: eine erfindungsgemäße Farbspritzpistole mit einem demontierten Farbbehälter in einer Gesamtdarstellung und einer vergrößerten Darstellung des Verbindungsbereichs zwischen Pistolenkörper und Farbbehälter;
- **Figur 2**: eine erfindungsgemäße Farbspritzpistole mit montiertem Farbbehälter in einer Gesamtdarstellung und einer vergrößerten Darstellung des Verbindungsbereichs zwischen Pistolenkörper und Farbbehälter;
- **Figur 3**: eine Standard-Farbspritzpistole mit Innengewinde und einem demontierten Farbbehälter in einer Gesamtdarstellung und einer vergrößerten Darstellung des Verbindungsbereichs zwischen Pistolenkörper und Farbbehälter;
- **Figur 4**: eine Standard-Farbspritzpistole mit Innengewinde und einem montierten Farbbehälter in einer Gesamtdarstellung und einer vergrößerten Darstellung des Verbindungsbereichs zwischen Pistolenkörper und Farbbehälter und
- **Figur 5**: ein weiteres Ausführungsbeispiel einer erfindungsgemäßen Farbspritzpistole mit Farbbehälter.

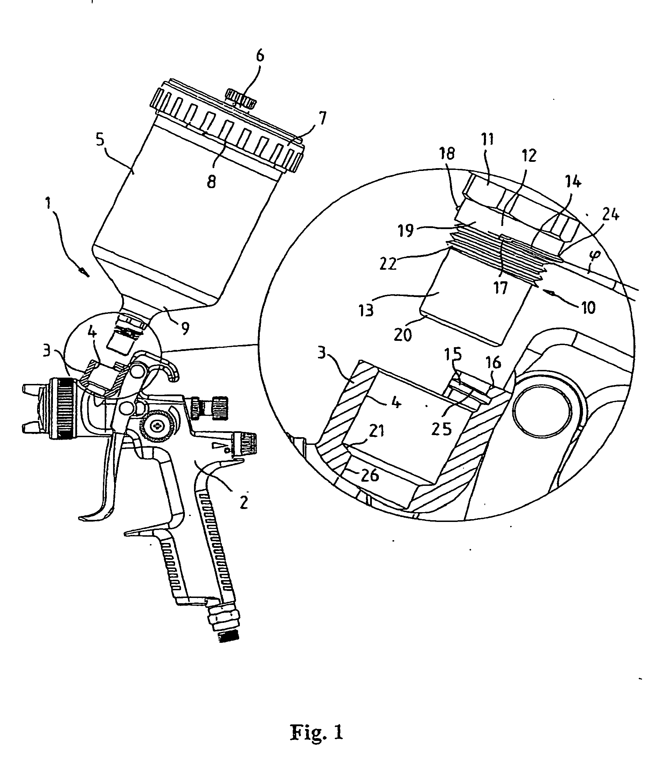

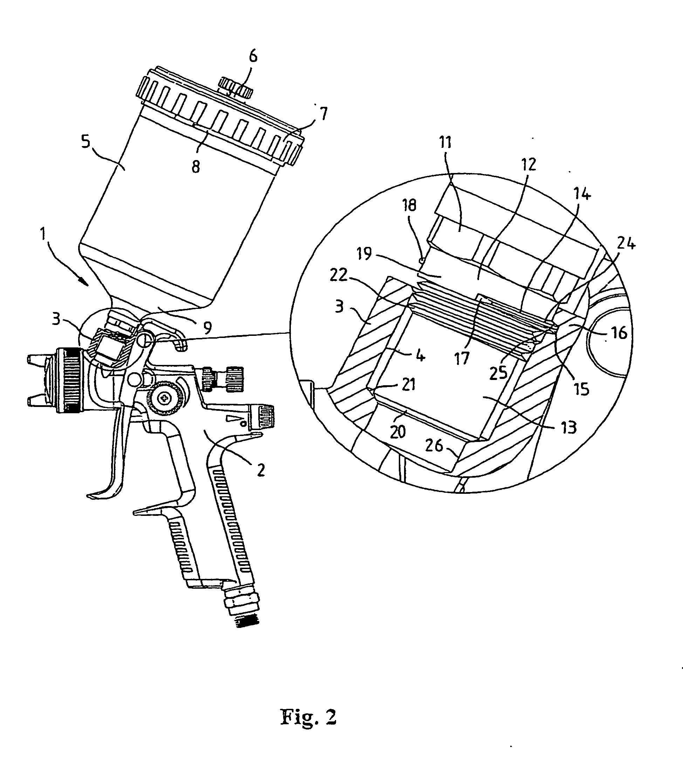

In den Figuren 1 und 2 ist eine Farbspritzpistole 1 gezeigt, die an ihrem Pistolenkörper 2 einen Anschlußbereich 3 mit einer Aufnahmebohrung 4 zur lösbaren Befestigung eines als Fließbecher 5 ausgeführten Farbbehälters aufweist. Zum Verschließen des aus Kunststoff oder Metall bestehenden Fließbechers 5 dient ein mit einer Tropfsperre 6 versehener Deckel 7, der über ein Gewinde 8 oder dgl. lösbar auf dem oberen Rand des Fließbechers 5 befestigt ist. In seinem nach unten konisch zulaufenden Unterteil 9 weist der Fließbecher 5 eine Bohrung auf, in die ein im wesentlichen hohlzylindrisches Anschlußteil 10 fest eingesetzt ist. Das z.B. aus Metall bestehende Anschlußteil 10 hat einen mit einem Außensechskant versehenen oberen Montagebereich 11, einen darunter angeordneten Verbindungsbereich 12 und einen in die Aufnahmebohrung 4 eingreifenden unteren Führungsbereich 13.

An dem Außenumfang des zylindrischen Verbindungsbereichs 12 ist ein über einen Teil seines Umfangs verlaufendes Schraubkeilelement 14 angeordnet, das in Eingriff mit einem dazu korrespondierenden Gegenelement 15 an der Innenseite eines Ansatzes 16 oberhalb der Aufnahmebohrung 4 am Anschlußteil 3 des Pistolenkörpers 2 gelangt. Das Schraubkeilelement 14 besteht bei der gezeigten Ausführung aus einem radial nach außen vorstehenden Keilprofil mit trapezförmigem Querschnitt, das in einer Schraubenlinie mit einem Steigungswinkel ϕ über ¾ des Umfangs des zylindrischen Verbindungsbereichs 12 verläuft. Zwischen dem unteren Anfang 17 und dem oberen Ende 18 des Schraubkeilelements 14 ist am Außenumfang des Verbindungsstücks 12 eine Aussparung 19 für den Eingriff des Ansatzes 16 vorgesehen. Das Gegenelement 15 ist als schraubenförmig verlaufende Keilnut ausgeführt, die ebenfalls einen Steigungswinkel ϕ aufweist.

An dem unteren Ende des Anschlußteils 10 befindet sich eine konische Dichtfläche 20, die beim Einführen des Anschlußteils 10 in die Aufnahmebohrung 4 zur Anlage an einer korrespondierenden konischen Gegenfläche 21 im Inneren der Aufnahmebohrung 4 gelangt. Die Position von Dichtfläche 20 und Gegenfläche 21 und die Lage des Schraubkeilelements 14 und des Gegenelements 15 sind so aufeinander abgestimmt, daß der Anfang 17 des Schraubkeilelements 14 bei der Drehung des in die Aufnahmebohrung 4 eingesteckten Anschlußteils 10 mit einem Spiel in Eingriff mit dem als Keilnut ausgeführten Gegenelement 15 gelangt und daß bereits bei einer viertel bis halben Umdrehung eine obere Keilfläche 24 des Schraubkeilelements 14 zur Anlage an einer entsprechenden Gegenfläche 25 der Keilnut 14 kommt.

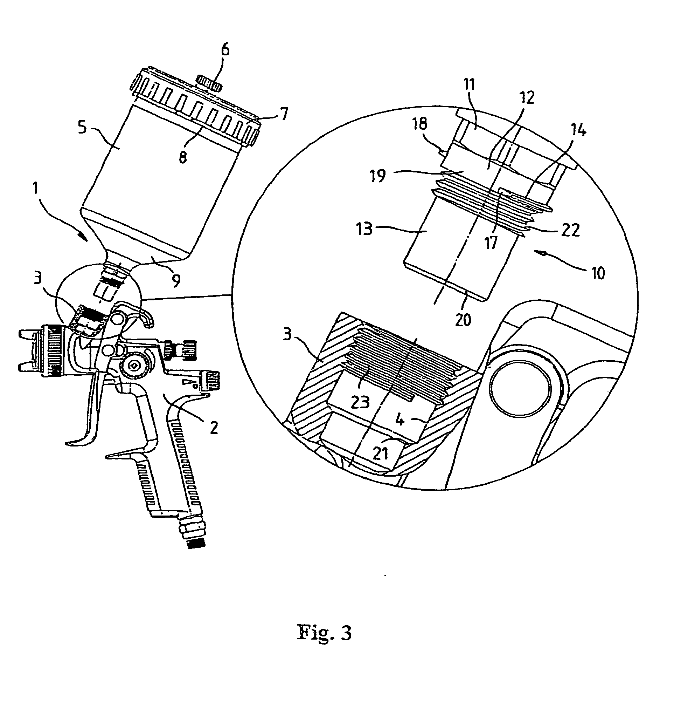

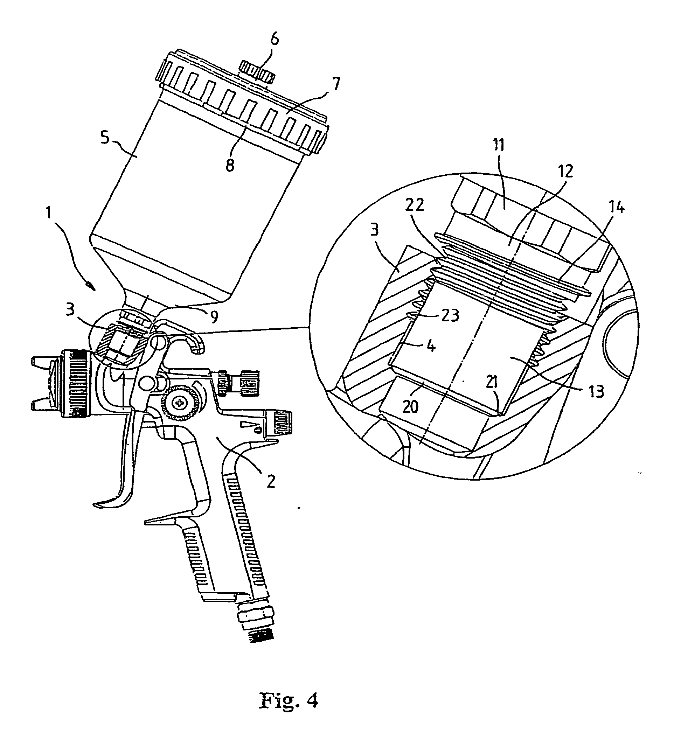

Bei der in Figur 1 und 2 gezeigten Ausführung ist im oberen Teil des Führungsbereichs 13 ein zusätzliches Befestigungsgewinde 22 vorgesehen, durch das der Fließbecher 5 auch an einer mit einem Innengewinde versehenen Standard-Farbspritzpistole befestigt werden kann, wie dies in den Figuren 3 und 4 gezeigt ist. Das zusätzliche Befestigungsgewinde 22 kann jedoch kürzer als die üblichen Befestigungsgewinde sein, so daß z.B. nur noch 1,5 bis 2 Umdrehungen erforderlich sind, um den erfindungsgemäßen Fließbecher 5 auf herkömmlichen Farbspritzpistolen zu befestigen. Der Innendurchmesser der Aufnahmebohrung 4 ist bei dem in Figur 1 und 2 dargestellten Pistolenkörper 2 geringfügig größer als der Außendurchmessser des Befestigungsgewindes 22, so daß durch das Befestigungsgewinde 22 eine seitliche Führung des Anschlußstücks 10 innerhalb der Aufnahmebohrung 4 erreicht wird. In einen unteren abgesetzten Teil 26 der Aufnahmebohrung 4 kann ein nicht dargestelltes Lacksieb eingreifen, das in das untere Ende des Anschlußteils 10 eingesteckt ist. Das zusätzliche Befestigungsgewinde 22 ist jedoch nicht erforderlich, wenn das Anschlußteil 10 nur zur Befestigung mittels des Schraubkeilelements 15 bestimmt ist.

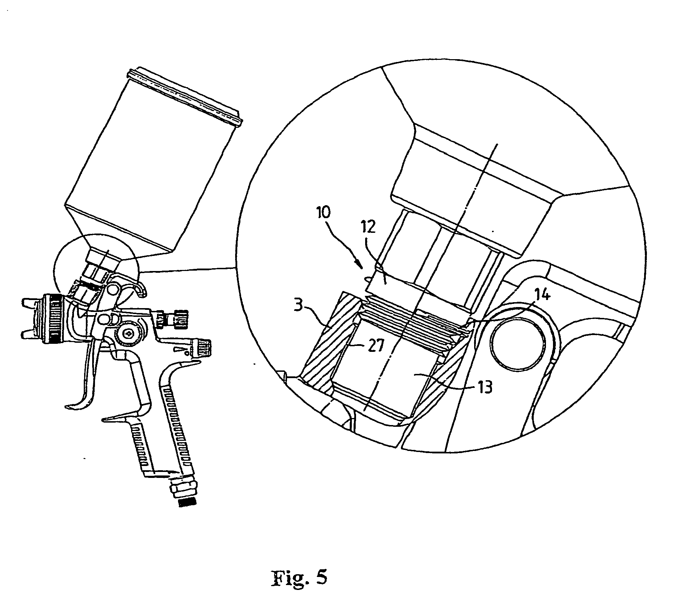

Gemäß Figur 5 kann eine seitliche Führung des Anschlußteils 10 in dem Pistolenkörper auch über den unteren zylindrischen Teil des Führungsbereichs 13 erreicht werden, wobei zwischen diesem und einer zusätzlich abgesetzten Innenwand 27 der Aufnahmebohrung 4 ein geringes Spiel von z.B. 2/10 mm vorgesehen ist.

Zur Befestigung des vorstehend beschriebenen Fließbechers 5 an der in Figur 1 und Figur 2 dargestellten Farbspritzpistole muß das Anschlußteil 10 zunächst in einer Stellung in die Aufnahmebohrung 6 eingeführt werden, in welcher der Ansatz 16 in die Aussparung 19 eingreifen kann. Wenn das Anschlußteil 10 mit seiner unteren Dichtfläche 20 an der entsprechenden Gegenfläche 21 der Aufnahmebohrung 4 aufliegt, kann das als Keilprofil ausgeführte Schraubkeilelement 14 durch entsprechende Drehung des Fließbechers 5 in das als Keilnut ausgeführte Gegenelement 15 zunächst mit einem Spiel eingreifen, wobei die obere Keilfläche 24 bei einer weiteren Drehung zur Anlage an der korrespondierenden Gegenfläche 25 gelangt und dadurch der Fließbecher 5 kraftschlüssig am Pistolenkörper 2 festgeklemmt wird. Durch eine Teilumdrehung des Fließbechers 5 in entgegengesetzter Richtung kann dieser wieder schnell vom Pistolenkörper 2 abgenommen werden.

## Patentansprüche

1. Farbspritzpistole mit einem Pistolenkörper (2) und einer Materialzuführungseinrichtung (5), die über eine Schraubkeilverbindung miteinander verbindbar sind, wobei die Schraubkeitverbindung ein am Umfang eines im wesentlichen hohlzylindriscnen Anschlußteils (10) der Materialzuführungseinrichtung (5) angeordnetes Schraubkeilelement (14) und ein dazu korrespondierendes Gegenelement (15) am Pistolenkörper (2) umfaßt, **dadurch gekennzeichnet, daß** das Schraubkeilelement (14), dessen Anfang (17) und Ende (18) eine Aussparung (19) begrenzen, über mehr als die Hälfte des Umfangs des Anschlußteils (10) verläuft und daß das Gegenelement (15) an einem einseitigen Ansatz (16) oberhalb einer Aufnahmebohrung (4) des Pistolenkörpers (2) angeordnet ist.

2. Farbspritzpistole nach Anspruch 1, **dadurch gekennzeichnet, daß** das Schraubkeilelement (14) als vom Aurchlußteil (10) vorstehendes Keilprofil und das Gegensegment (15) in Form einer an der Innenseite des Ansatzes (16) angeordneten Keilnut ausgeführt ist.

3. Farbspritzpistole nach Anspruch 1 oder 2, **dadurch gekennzeichnet, daß** das Schraubkeilelement (14) und das Gegenelement (15) in Form eines nur teilweise umlaufenden Außen- bzw. Innengewindegangs ausgebildet sind.

4. Farbspritzpistole nach einem der Ansprüche 1 bis 3, **dadurch gekennzeichnet, daß** das Anschlußteil (10) einen Führungsbereich (13) zur seitlichen Führung innerhalb der Aufnahmebohrung (4) enthält.

5. Farbspritzpistole nach einem der Ansprüche 1 bis 4, **dadurch gekennzeichnet, daß** das Schraubkeilsegment (14) eine kontinuierlich ansteigende obere Keilfläche (24) zur Anlage an einer entsprechenden Gegenfläche (25) des Gegensegments (15) enthält.

6. Farbspritzpistole nach einem der Ansprüche 1 bis 3, **dadurch gekennzeichnet, daß** das Schraubkeilsegment (14) ein Dreiecks- oder Trapezprofil aufweist.

7. Farbspritzpistole nach einem der Ansprüche 1 bis 4, **dadurch gekennzeichnet, daß** an dem Anschlußteil (10) ein zusätzliches Befestigungsgewinde (22) angeordnet ist.

8. Farbspritzpistole nach einem der Ansprüche 1 bis 7, **dadurch gekennzeichnet, daß** in der Aufnahmebohrung (4) eine Gegenfläche (21) zur Anlage einer Dichtfläche (20) des Verbindungsteils (10) vorgesehen ist.

9. Farbspritzpistole nach einem der Ansprüche 1 bis 8. **dadurch gekennzeichnet, daß** der Ansatz (16) am Pistolenkörper (2) eine geringere Breite als die Aussparung (19) zwischen dem Anfang (17) und dem Ende (18) des Schraubkeilelements (14) aufweist.

10. Farbspritzpistole nach einem der Ansprüche 1 bis 9, **dadurch gekennzeichnet, daß** die Materialzuführungseinrichtung (5) ein Farbbehälter ist.

11. Verwendung eines Anschlußteils für die Verbindung eines Farbbehälters mit einem Pistolenkörper (2) einer Farbspritzpistole, das ein Schraubkeilelement (14) zum Eingriff in ein korrespondierendes Gegenelement (15) am Pistolenkörper (2) der Farbspritzpistole (1) enthält, **dadurch gekennzeichnet, daß** das Schraubkeilelement (14), dessen Anfang (17) und Ende (18) eine Aussparung (19) für den Eingriff eines einseitigen Ansatzes (16) am Pistolenkörper (2) begrenzen, über mehr als die Hälfte des Umfangs eines Verbindungsbereichs (19) des Anschlußteils (10) verläuft.

12. Verwendung eines Anschlußteils nach Anspruch 11, **dadurch gekennzeichnet, daß** es einen Führungsbereich (13) zur seitlichen Führung innerhalb einer Aufnahmebohrung (4) des Pistolenkörpers (2) enthält.

13. Verwendung eines Anschlußteils nach Anspruch 11 oder 12, **dadurch gekennzeichnet, dass** das Schraubkeilelement (14) als nach außen vorstehendes Keilprofil ausgeführt ist.

14. Verwendung eines Anschlußteils nach einem der Ansprüche 11 bis 13, **dadurch gekennzeichnet, daß** das Schraubkeilelement (14) in Form eines nur teilweise umlaufenden Außengewindegangs ausgebildet ist.

15. Verwendung eines Anschlußteils nach einem der Ansprüche 11 bis 14, **dadurch** daß das Schraubkeilelement (14) ein Dreiecks- oder Trapezprofil aufweist.

16. Verwendung eines Anschlußteils nach einem der Anspreche 11 bis 15, **dadurch gekennzeichnet, daß** es ein zusätzliches Befestigungsgewinde (22) enthalt.

17. Verwendung eines Farbbehälters für eine Farbspritzpistole **gekennzeichnet durch** die Verwendung eines Anschlußteils (10) noch einem der Patentansprüche 11 bis 16.

18. Verwendung eines Farbbehälters nach Anspruch 17. **dadurch gekennzeichnet daß** das Anschlußteil (10) fest mit dem Farbbehälter (5) verbunden ist.

19. Verwendung eines Farbbehälters nach Anspruch 17, **dadurch gekennzeichnet, daß** das Anschlußteil (10) einstückig mit dem Farbbehälter (5) ausgeführt ist.

## Claims

1. Paint spray gun with a gun body (2) and a material supply device (5) which can be connected to one another by means of a screw wedge connection, the screw wedge connection comprising a screw wedge element (14) which is arranged on the circumference of an essentially hollow cylindrical connecting part (10) of the material supply device (5), and a corresponding counterpart element (15) on the gun body (2), **characterised in that** the screw wedge element (14), the start (17) and end (18) of which bound a recess (19), extends over more than half the circumference of the connecting part (10) and **in that** the counterpart element (15) is arranged on a projection (16) on one side above a receiving bore (44) of the gun body (2).

2. Paint spray gun according to claim 1, **characterised in that** the screw wedge element (14) takes the form of a wedge profile which protrudes from the connecting part (10), and the counterpart segment (15) takes the form of a wedge groove which is arranged on the inside of the projection (16).

3. Paint spray gun according to claim 1 or 2, **characterised in that** the screw wedge element (14) and the counterpart element (15) take the form of an only partly circumferential external and internal thread respectively.

4. Paint spray gun according to one of claims 1 to 3, **characterised in that** the connecting part (10) comprises a guide area (13) for lateral guidance inside the receiving bore (4).

5. Paint spray gun according to one of claims 1 to 4, **characterised in that** the screw wedge segment (14) comprises a continuously rising upper wedge face (24) for bearing on a corresponding counterpart face (25) of the counterpart segment (15).

6. Paint spray gun according to one of claims 1 to 3, **characterised in that** the screw wedge segment (14) exhibits a triangular or trapezoidal profile.

7. Paint spray gun according to one of claims 1 to 4, **characterised in that** an additional fastening thread (22) is arranged on the connecting part (10).

8. Paint spray gun according to one of claims 1 to 7, **characterised in that** a counterpart face (21) for bearing on a sealing face (20) of the connecting part (10) is provided in the receiving bore (4).

9. Paint spray gun according to one of claims 1 to 8, **characterised in that** the projection (16) on the gun body (2) has a smaller width than the recess (19) between the start (17) and end (18) of the screw wedge element (14).

10. Paint spray gun according to one of claims 1 to 9, **characterised in that** the material supply device (5) is a paint container.

11. Use of a connecting part for connection of a paint container with a gun body (2) of a paint spray gun which comprises a screw wedge element (14) for engagement into a corresponding counterpart element (15) on the gun body (2) of the paint spray gun (1), **characterised in that** the screw wedge element (14), the start (17) and end (18) of which bound a recess (19) for engagement of a projection (16) on one side on the gun body (2), extends over more than half the circumference of a connecting area (19) of the connecting part (10).

12. Use of a connecting part according to claim 11, **characterised in that** it comprises a guide area (13) for lateral guidance inside a receiving bore (4) of the gun body (2).

13. Use of a connecting part according to claim 11 or 12, **characterised in that** the screw wedge element (14) takes the form of a wedge profile which protrudes towards the outside.

14. Use of a connecting part according to one of claims 11 to 13, **characterised in that** the screw wedge element (14) takes the form of an external thread which only runs around part of the circumference.

15. Use of a connecting part according to one of claims 11 to 14, **characterised in that** the screw wedge element (14) exhibits a triangular or trapezoidal profile.

16. Use of a connecting part according to one of claims 11 to 15, **characterised in that** it comprises an additional fastening thread (22).

17. Use of a paint container for a paint spray gun, **characterised by** the use of a connecting part (10) according to one of patent claims 11 to 16.

18. Use of a paint container according to claim 17, **characterised in that** the connecting part (10) is connected securely to the paint container (5).

19. Use of a paint container according to claim 17, **characterised in that** the connecting part (10) is formed in one piece with the paint container (5).

## Revendications

1. Pistolet pulvérisateur de peinture comprenant un corps (2) et un dispositif (5) d'amenée de matière, pouvant être reliés l'un à l'autre par l'intermédiaire d'une solidarisation par cale hélicoïdale, ladite solidarisation par cale hélicoïdale étant composée d'un élément hélicoïdal de coincement ou de calage (14) situé sur le pourtour d'une pièce de raccordement (10) du dispositif (5) d'amenée de matière, sensiblement dotée d'une configuration cylindrique creuse, et d'un élément complémentaire concordant (15) situé sur le corps (2) du pistolet, **caractérisé par le fait que** l'élément hélicoïdal de coincement ou de calage (14), dont l'amorce (17) et l'achèvement (18) délimitent une dépouille (19), s'étend sur plus de la moitié du pourtour de la pièce de raccordement (10) ; et **par le fait que** l'élément complémentaire (15) est implanté sur un appendice unilatéral (16), au-dessus d'un alésage récepteur (4) du corps (2) du pistolet.

2. Pistolet pulvérisateur de peinture selon la revendication 1, **caractérisé par le fait que** l'élément hélicoïdal de coincement (14) est réalisé sous la forme d'un profil de coincement saillant au-delà de la pièce de raccordement (10), et le segment complémentaire (15) revêt la forme d'une rainure de coincement pratiquée à la face interne de l'appendice (16).

3. Pistolet pulvérisateur de peinture selon la revendication 1 ou 2, **caractérisé par le fait que** l'élément hélicoïdal de coincement (14) et l'élément complémentaire (15) sont réalisés sous la forme de filets respectivement extérieur et intérieur, ne décrivant que partiellement un tracé périphérique.

4. Pistolet pulvérisateur de peinture selon l'une des revendications 1 à 3, **caractérisé par le fait que** la pièce de raccordement (10) comprend une zone de guidage (13) pour assurer le guidage latéral à l'intérieur de l'alésage récepteur (4).

5. Pistolet pulvérisateur de peinture selon l'une des revendications 1 à 4, **caractérisé par le fait que** le segment hélicoïdal de coincement (14) comprend une surface cunéiforme supérieure (24) à ascension continue, conçue pour venir s'appliquer contre une surface complémentaire correspondante (25) du segment complémentaire (15).

6. Pistolet pulvérisateur de peinture selon l'une des revendications 1 à 3, **caractérisé par le fait que** le segment hélicoïdal de coincement (14) offre un profil triangulaire ou trapézoïdal.

7. Pistolet pulvérisateur de peinture selon l'une des revendications 1 à 4, **caractérisé par le fait qu'**un filetage additionnel de fixation (22) est façonné sur la pièce de raccordement (10).

8. Pistolet pulvérisateur de peinture selon l'une des revendications 1 à 7, **caractérisé par le fait qu'**une surface complémentaire (21) est prévue, dans l'alésage récepteur (4), pour offrir un appui à une surface d'étanchement (20) de la pièce de liaison (10).

9. Pistolet pulvérisateur de peinture selon l'une des revendications 1 à 8, **caractérisé par le fait que** l'appendice (16), situé sur le corps (2) dudit pistolet, possède une moindre largeur que la dépouille (19) située entre l'amorce (17) et l'achèvement (18) de l'élément hélicoïdal de coincement (14).

10. Pistolet pulvérisateur de peinture selon l'une des revendications 1 à 9, **caractérisé par le fait que** le dispositif (5) d'amenée de matière est un réceptacle de peinture.

11. Utilisation d'une pièce de raccordement qui est conçue pour relier un réceptacle de peinture au corps (2) d'un pistolet pulvérisateur de peinture, et comprend un élément hélicoïdal de coincement (14) destiné à venir en prise dans un élément complémentaire concordant (15), situé sur le corps (2) dudit pistolet (1) pulvérisateur de peinture, **caractérisée par le fait que** l'élément hélicoïdal de coincement (14), dont l'amorce (17) et l'achèvement (18) délimitent une dépouille (19) pour la pénétration d'un appendice unilatéral (16) façonné sur le corps (2) du pistolet, s'étend sur plus de la moitié du pourtour d'une zone de solidarisation (19) de la pièce de raccordement (10).

12. Utilisation d'une pièce de raccordement, selon la revendication 11, **caractérisée par le fait que** ladite pièce comprend une zone de guidage (13) pour assurer le guidage latéral à l'intérieur d'un alésage récepteur (4) du corps (2) du pistolet.

13. Utilisation d'une pièce de raccordement, selon la revendication 11 ou 12, **caractérisée par le fait que** l'élément hélicoïdal de coincement (14) est réalisé sous la forme d'un profil de coincement dépassant vers l'extérieur.

14. Utilisation d'une pièce de raccordement, selon l'une des revendications 11 à 13, **caractérisée par le fait que** l'élément hélicoïdal de coincement (14) est réalisé sous la forme d'un filet extérieur ne décrivant que partiellement un tracé périphérique.

15. Utilisation d'une pièce de raccordement, selon l'une des revendications 11 à 14, **caractérisée par le fait que** l'élément hélicoïdal de coincement (14) offre un profil triangulaire ou trapézoïdal.

16. Utilisation d'une pièce de raccordement, selon l'une des revendications 11 à 15, **caractérisée par le fait que** ladite pièce comprend un filetage additionnel de fixation (22).

17. Utilisation d'un réceptacle de peinture destiné à un pistolet pulvérisateur de peinture, **caractérisée par** l'utilisation d'une pièce de raccordement (10) selon l'une des revendications 11 à 16.

18. Utilisation d'un réceptacle de peinture, selon la revendication 17, **caractérisée par le fait que** la pièce de raccordement (10) est reliée rigidement audit réceptacle de peinture (5).

19. Utilisation d'un réceptacle de peinture, selon la revendication 17, **caractérisée par le fait que** la pièce de raccordement (10) est réalisée d'un seul tenant avec ledit réceptacle de peinture (5).
